# EUROPEAN PATENT APPLICATION

(11) **EP 3 623 448 A1**
(43) Date of publication of application: **18.03.2020**
(21) Application number: 18194532.0
(22) Date of filing: 14.09.2018
(51) Int. Cl.: C09K 11/77, H05B 33/14, H05B 33/18

(54) **METHOD FOR TREATING A LUMINESCENT MATERIAL COMPRISING ORGANIC LIGANDS**

(71) Applicant: Seaborough IP I B.V., 1019 AG Amsterdam (NL)
(72) Inventor: van de Haar, Marie Anne, 1381HL Weesp (NL)
(74) Representative: Hoyng Rokh Monegier LLP

(57) **Abstract**

The invention relates to a method for treating a luminescent material comprising organic ligands, said method comprising contacting said luminescent material comprising organic ligands with an oxidizing agent. Preferably, the luminescent material is in the form of nanoparticles.

## Description

### FIELD OF THE INVENTION

The invention relates to a method for treating a luminescent material comprising organic ligands. The invention also relates to a luminescent material obtainable by the method according to the invention.

### BACKGROUND OF THE INVENTION

Luminescent materials, for instance if in the form of nanoparticles, may comprise organic ligands. Nanoparticles are most often synthesized in solution, wherein the growth and final size can be controlled. To prevent clustering during or after synthesis and to have additional means to control the growth, it is very common to bind 'organic ligands' or 'capping molecules' to the surface of the nanoparticles. These are organic molecules, that either by their electrostatic charge or just by their 'bulkiness', or by a combination of these, prevent clustering of the particles.

For certain applications it is desirable to remove the organic ligands from the luminescent material. This is for instance the case, if it is aimed to allow non-radiative energy transfer (sometimes also referred to as Fluorescent Resonance Energy Transfer, FRET) from a sensitizer material to a light emitting material, in which case these materials should be in close enough proximity.

Although various methods are known in literature to remove or replace organic ligands, it is not a straight-forward process to do so and it can be very dependent on the exact conditions, kind of nanoparticles and organic ligands which method works. Especially in the case of nanoparticle mixtures, with different kinds of particles and/or organic ligands such a selective method is often not desirable. An example of such a selective method is described in Nano Lett., 2011, 11 (12), pp 5356-5361.

A less-selective known method is to use acids, like HCl (typically around 0.1M) to remove the organic ligands. The use of HCl to remove organic ligands is described in Wang et al, Tuning upconversion through Energy Migration in Core-Shell Nanoparticles, Supplementary Information, Nature Materials (2011) 1-35. However, strong acids can damage or even dissolve the nanoparticle surface, which results in reduced luminescence efficiencies.

In view of the above it is an object of the invention to provide method for removing organic ligands from a luminescent material, preferably in the form of nanoparticles, which does not or minimizes damage to the particles and which is less selective, i.e. can be applied to a wide variety of luminescent materials and organic ligands.

### SUMMARY OF THE INVENTION

The invention provides a method for treating a luminescent material comprising organic ligands, said method comprising contacting said luminescent material with an oxidizing agent.

Contacting the luminescent material comprising organic ligands with the oxidation agent is found to result in oxidation of at least part of the organic ligands. Oxidation of the organic ligands has been found to result in their effective removal from the luminescent material. Without wishing to be bound by any scientific theory it is believed that the oxidation breaks down the organic ligands enabling the residues to dissolve.

If the luminescent material is in the form of nanoparticles, the efficient removal of organic ligands enables to obtain particles which are in close proximity with one another. This is particularly advantageous if it is desired obtain a material which allows non-radiative energy transfer (FRET) from a sensitizer material to a light emitting material.

### BRIEF DESCRIPTION OF THE DRAWINGS

FIGURE 1 provides FTIR spectra of LaPO₄ nanoparticles before and after organic ligand removal. Peaks around 1450 and 2950 cm⁻¹ indicate C-H bending and stretching form the organic ligands respectively.
FIGURE 2 provides emission spectra from LaPO₄:Eu³⁺/LaPO₄:Tb³⁺ mixtures, mixed in a 1 :1 weight ratio. Excitation at 484.5 nm.
FIGURE 3 provides emission spectra from LaPO₄:Eu³⁺/LaPO₄:Tb³⁺ mixtures, mixed in a 1 :1 weight ratio. Excitation at 395 nm.
FIGURE 4 provides excitation spectra from LaPO₄:Eu³⁺/LaPO₄:Tb³⁺ mixtures, mixed in a 1 :1 weight ratio. Emission at 695 nm.
FIGURE 5 shows Tb³⁺ decay in LaPO₄:Eu³⁺/LaPO₄:Tb³⁺ mixtures, mixed in a 1:1 weight ratio. Excitation at 355 nm, emission at 542 nm.

### Luminescent material comprising organic ligands

The luminescent material comprising organic ligands is not limited to a particular luminescent material having organic ligands attached to its surface. As is known to the skilled person, ligands can also be referred to as capping molecules (or a capping agent).

As is known to the skilled person, organic ligands are generally used to control growth and to avoid clustering of particles, in particular of nanoparticles. The organic ligands may be any organic ligands suitable for this purpose. Examples of organic ligands include fatty acids (including salts and esters thereof), amines, polyols, for instance oleic acid, oleyl amine, oleate, tributylamine and (poly) ethylene glycol.

Preferably, the luminescent material is provided in the form of nanoparticles. Any suitable nanoparticles may be used. Suitable nanoparticles include particles of which at least one dimension is at a nanometer scale, preferably ≤ 100 nm. More preferably, the D50 of the nanoparticle diameter is ≥ 1nm and ≤ 50 nm, most preferably ≥ 2nm and ≤ 10 nm. The D50 may suitably be determined using transmission electron microscopy (TEM).

The luminescent material may comprise a host lattice which may be doped with ions.

Any suitable host lattice may be used. The host lattice may for instance be selected from the group consisting of oxides, fluorides, nitrides, borates, garnets, molybdates, phosphates, vanadates, chlorides, sulfides, selenides, silicates, aluminates, oxyfluorides, fluorosilicates, oxychlorides, oxynitrides, oxysulfides, oxyselenides, fluorochlorides, and fluorobromides or combinations of these or another inorganic host material in which optically active lanthanide ions can be incorporated.

In a preferred embodiment, the host lattice is an oxide, garnet, phosphate, vanadate or combination of these such as Y₂O₃, YVPO₄, YVO₄ or LaPO₄ or Y₃Al₅O₁₂ ("YAG") or Lu₃Al₅O₁₂ ("LuAG").

Any suitable optically active (e.g. luminescent) ion may be used. The host lattice may for instance be doped with one or more ions selected from the group consisting of Eu³⁺, Tb³⁺, Mn⁴⁺, Eu²⁺, Pb²⁺, Bi³⁺ and Ce³⁺, preferably Ce³⁺ or Eu³⁺, Mn⁴⁺ and Tb³⁺, most preferably Eu³⁺ or Ce³⁺.

In a preferred embodiment the luminescent material is a material disclosed herein below as first luminescent material and/or second luminescent material.

### Oxidizing agent

The method according to the invention comprises contacting the luminescent material comprising the organic ligands with an oxidizing agent. Any suitable oxidizing agent may be used. Suitable oxidation agents may include any compound or combination of compounds, preferably in a solution, capable of oxidizing at least part of the organic ligands. Preferably, the oxidation agent is selected such that it is capable of oxidizing carbon present in the carbon chain of the organic ligands. Without wishing to be bound by any scientific theory, it is believed that as a result of the oxidation the organic ligands break down enabling the residues to dissolve and be removed in a simple and efficient manner, preferably using one or more washing steps.

Preferably the oxidizing agent has a standard reduction potential > 1 Volt.

The oxidizing agent may for example be selected from the group consisting of an inorganic peroxide (preferably H₂O₂), Fenton's reagent, nitric acid (HNO₃) and nitrate compounds, sulfuric acid (H₂SO₄), peroxydisulfuric acid (H₂S₂O₈), peroxymonosulfuric acid (H₂SO₅), chlorite, chlorate, perchlorate, and other analogous halogen compounds,
Fluorine (F₂), chlorine (Cl₂), and other halogens, hypochlorite and other hypohalite compounds, hexavalent chromium compounds such as chromic and dichromic acids and chromium trioxide, pyridinium chlorochromate (PCC), and chromate/dichromate compounds, permanganate compounds such as potassium permanganate, sodium perborate, nitrous oxide (N₂O), nitrogen dioxide/dinitrogen tetroxide (NO₂ / N₂O₄), potassium nitrate (KNO₃).

Preferably, the oxidizing agent comprises H₂O₂. Preferably, the oxidizing agent comprises H₂O₂ in combination with NH₄OH or H₂SO₄, more preferably H₂O₂ in combination with NH₄OH. Preferably, the oxidation agent is present in a solution, preferably an aqueous solution.

### Contacting the luminescent material comprising organic ligands with the oxidizing agent

The luminescent material comprising organic ligands may be contacted with the oxidizing agent in any suitable manner.

Preferably, the luminescent material comprising organic ligands is contacted with the oxidizing agent in the presence of a solution comprising the oxidizing agent.

Any suitable solution in which the luminescent material comprising the organic ligands may be dispersed may be used. Preferably, the solution comprises water or an alcohol (preferably methanol or ethanol) or a mixture thereof.

Preferably, the solution comprises NH₄OH, more preferably the solution comprises NH₄OH and H₂O₂. Preferably, the solution comprises NH₄OH and H₂O₂ in a weight ratio between 8 : 1 and 2 : 1 most preferably in a weight ratio of about 3:1.

Preferably, the solution comprising NH₄OH and H₂O₂ is at a temperature of between 60 and 90 °C, preferably about 70 °C.

In a preferred embodiment, the luminescent material comprising the organic ligands, preferably luminescent material in the form of nanoparticles, is dispersed in a first solution, for instance in water or an alcohol (e.g. methanol or ethanol) or a mixture thereof. The first solution may then be combined with the oxidizing agent and/or with a solution comprising the oxidizing agent. For instance, the oxidizing agent and/or a solution containing the oxidizing agent may be added to the first solution containing the luminescent material.

Contacting the luminescent material comprising the organic ligands with the oxidizing agent may be performed at any suitable temperature and during any suitable period. The skilled person is able to determine optimal conditions. In a preferred embodiment, in particular if the oxidizing agent is H₂O₂ which is present in a NH₄OH solution, contacting the luminescent material comprising the organic ligands with the oxidizing agent may for instance be effected for 15-120 minutes.

### Recovering the luminescent material (from the solution)

The method may comprising separating said luminescent material from the oxidizing agent.

Preferably, the method comprises recovering the luminescent material from the solution. This may be achieved in any suitable manner.

Preferably, recovering the luminescent material from the solution comprises gravity separation (preferably centrifugation) and/or drying by evaporation.

Preferably, recovering the luminescent material from the solution comprises washing the luminescent material using a washing liquid and recovering the luminescent material from the washing liquid. Preferably, recovering the luminescent material from the washing liquid comprises gravity separation (preferably by centrifugation) and/or drying by evaporation.

Preferably, recovering the luminescent material from the solution and/or from the washing liquid comprises at least drying by evaporation. Drying by evaporation may be performed in any suitable manner, for instance in an oven and/or under vacuum.

Preferably the method according to the invention comprises:
(i) providing a luminescent material comprising organic ligands;
(ii) contacting the luminescent material with an oxidizing agent in the presence of a solution comprising the oxidizing agent; and
(iii) recovering the luminescent material from the solution, wherein said recovering comprises
   (a) gravity separation, preferably centrifugation, to separate the luminescent material form at least part of the solution;
   (b) washing the separated luminescent material using a washing liquid; and
   (c) recovering the luminescent material from the washing liquid by gravity separation, preferably centrifugation; and
   (d) drying the luminescent material, preferably in an oven.

### Mixtures comprising a first luminescent material and a second luminescent material

In a preferred embodiment, the luminescent material comprising organic ligands is a mixture comprising at least a first luminescent material and a second luminescent material, wherein the first luminescent material and/or the second luminescent material comprise organic ligands. Preferably, the first luminescent material and the second luminescent material comprise organic ligands.

Thus, in this preferred embodiment, the mixture comprising at least a first luminescent material and a second luminescent material is contacted with the oxidizing agent. This enables to obtain a luminescent material in which the first luminescent material and second luminescent material are present in close proximity. Such close proximity is particularly advantageous if it is desired to obtain a material which allows energy transfer (FRET) from the second luminescent material (or sensitizer material) to the first luminescent material (light emitting material).

Preferably, the first luminescent material and/or second luminescent material are provided in the form of nanoparticles. More preferably, the first luminescent material and second luminescent material are provided in the form of nanoparticles.

Preferably, the first luminescent material and the second luminescent material are selected such that the second luminescent material has an emission spectrum which overlaps at least partly with one or more of excitation bands of the first luminescent material. This is in particular advantageous if it is desired to obtain a material which allows energy transfer (FRET) from the second luminescent material to the first luminescent material. The skilled person will understand that, in this preferred embodiment, the first luminescent material functions as light emitting material and the second luminescent material functions as sensitizer material.

Preferably, the first luminescent material is a red emitting material. As used herein the term red emitting material refers to a material which, upon suitable excitation, has one or more emission bands between 600 nm and 700 nm. According to alternative embodiments, the first luminescent material is a material having, upon suitable excitation, one or more emission bands between 700 and 1400 nm (IR-A), between 580 and 600 nm (amber and/or orange), between 560 and 580 nm (yellow), between 510-560 nm (green), between 480 and 510 nm (cyan), between 440 and 480 nm (blue), between 400-440 nm (violet), between 315-400 nm (UV-A), or between 280-315 nm (UV-B).

Preferably, the first luminescent material is doped with one or more ions selected from the group consisting of Eu³⁺, Tb³⁺, Mn⁴⁺. Especially preferred is Eu³⁺ or Tb³⁺.

The first luminescent material and second luminescent material may have any suitable host lattice. The host lattice may for instance be selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these or another inorganic host material in which the optically active lanthanide ions can be incorporated.

In a preferred embodiment, the host lattice of the first luminescent material is an oxide, phosphate, vanadate or a combination thereof, for instance Y₂O₃, YVPO₄, YVO₄ or LaPO₄. Preferably, said preferred host lattice of the first luminescent material is doped with one or more ions selected from the group consisting of Eu³⁺ and Tb³⁺.

In case of Eu³⁺ doping, the first luminescent material may for example have a host lattice doped at a doping level of 2-30% Eu³⁺, more preferably 5-15% Eu³⁺. In case Tb³⁺ doping, the first luminescent material may have a host lattice doped at a doping level of 5-100% Tb³⁺, more preferably 20-50% Eu³⁺.

In an exemplary embodiment, the first luminescent material is selected from the group consisting of (Ca,Sr)Ga2O6:Eu3+ (or Tb3+), (Ca,Sr,Ba)La2Bi2(SiO4)3O:Eu3+ (or Tb3+), (Ca,Sr,Ba)SnO3:Eu3+ (or Tb3+), (Ca,Y,Gd)MoO4:Eu3+ (or Tb3+), (Y,Gd)BO3 (pseudo-vaterite):Eu3+ (or Tb3+), (Y,Tb)SiO5:Eu3+ (or Tb3+), A-La2O3:Eu3+ (or Tb3+), Ba2(SiO4):O2-:Eu3+ (or Tb3+), Ba2MgSi2O7:Eu3+ (or Tb3+), Ba2Y(BO3)2Cl:Eu3+ (or Tb3+), Ba3(PO4)2:Eu3+ (or Tb3+), Ba3Ca3(PO4)4:Eu3+ (or Tb3+), Ba3Gd(BO3)3:Eu3+ (or Tb3+), Ba3Gd2(BO3)4:Eu3+ (or Tb3+), Ba3La2(BO3)4:Eu3+ (or Tb3+), Ba3V2O8:Eu3+ (or Tb3+), Ba3Y2(BO3)4:Eu3+ (or Tb3+), BaB8O13:Eu3+ (or Tb3+), BaBPO5:Eu3+ (or Tb3+), BaFCl:Eu3+ (or Tb3+), BaGd2 O4:Eu3+ (or Tb3+), BaGd4 Si5O17:Sm:Eu3+ (or Tb3+), BaGdB9O16:Eu3+ (or Tb3+), BaLaB9O16:Eu3+ (or Tb3+), BaSO4:Eu3+ (or Tb3+), BaY2F8:Yb:Eu3+ (or Tb3+), BaY2Si3O10:Eu3+ (or Tb3+), BaYB9O16:Eu3+ (or Tb3+), BaZr(BO3)2:Eu3+ (or Tb3+), BaZrO3:Eu3+ (or Tb3+), BaZrO3:Eu3+ (or Tb3+), b-BaB2O4:Eu3+ (or Tb3+), B-Gd2O3:Eu3+ (or Tb3+), Ca2Al(AlSiO7):Eu3+ (or Tb3+), Ca2Gd2(GeO4)2O:Eu3+ (or Tb3+), Ca2Gd8(SiO4)6O2:Eu3+ (or Tb3+), Ca2Gd8Si6O26:Eu3+ (or Tb3+), Ca2La8(SiO4)6O2:Eu3+ (or Tb3+), Ca3(BO3)2:Eu3+ (or Tb3+), Ca3Al2O6:Eu3+ (or Tb3+), Ca3Gd2(BO3)4:Eu3+ (or Tb3+), Ca3La2(BO3)4:Eu3+ (or Tb3+), Ca3Y2(BO3)4:Eu3+ (or Tb3+), Ca4GdO(BO3)3:Eu3+ (or Tb3+), Ca5(PO11)3F:Eu3+ (or Tb3+), Ca5(PO4)3Br:Eu3+ (or Tb3+), Ca5(PO4)3F:(4f-site):Eu3+ (or Tb3+), Ca5(PO4)3F:(6h-site):Eu3+ (or Tb3+), Ca5(PO4)3OH:Eu3+ (or Tb3+), CaBPO5:Eu3+ (or Tb3+), CaF2:Eu3+ (or Tb3+), CaLaB7O13:Eu3+ (or Tb3+), calcite-CaCO3:Eu3+ (or Tb3+), CaO:Eu3+ (or Tb3+), CaSO4:Eu3+ (or Tb3+), CaYO(BO3):Eu3+ (or Tb3+), C-Gd2O3:Eu3+ (or Tb3+), C-Lu2O3:(C2):Eu3+ (or Tb3+), C-Lu2O3:(C3*i*):Eu3+ (or Tb3+), Cs2NaYF6:Tm:Eu3+ (or Tb3+), C-Sc2O3:Yb:Eu3+ (or Tb3+), C-Y2O3:Eu3+ (or Tb3+), Eu3+ (or Tb3+)[(ttfa)3(phen)]0:Eu3+ (or Tb3+), Gd17.33(BO3)4(B2O5)2O16:Eu3+ (or Tb3+), Gd2BaZnO5:Eu3+ (or Tb3+), Gd2O2(SO4):Eu3+ (or Tb3+), Gd2P4O13:Eu3+ (or Tb3+), Gd3O4Br:Eu3+ (or Tb3+), Gd3PO7:Eu3+ (or Tb3+), Gd3Te2Li3O12:Eu3+ (or Tb3+), Gd8P2O17:Eu3+ (or Tb3+), GdAl3 (BO3)4:Eu3+ (or Tb3+), GdAlO3:Eu3+ (or Tb3+), GdAlO3:Eu3+ (or Tb3+), GdB3O6:Eu3+ (or Tb3+), GdBO3:Eu3+ (or Tb3+), GdGaO3:Eu3+ (or Tb3+), GdOBr:Eu3+ (or Tb3+), GdOCl:Eu3+ (or Tb3+), GdP3O9:Eu3+ (or Tb3+), GdPO4:Eu3+ (or Tb3+), I-CaB2O4:Eu3+ (or Tb3+), InBO3:Eu3+ (or Tb3+), I-SrB2O4:Eu3+ (or Tb3+), KCaGd(PO4)2:Eu3+ (or Tb3+), La26O27(BO3)8:Eu3+ (or Tb3+), La2BaZnO5:Eu3+ (or Tb3+), La2Hf2O7:Eu3+ (or Tb3+), La2O2(SO4):Eu3+ (or Tb3+), La2O2S:Eu3+ (or Tb3+), La2O2S:Eu3+ (or Tb3+), La2W3O12:Eu3+ (or Tb3+), La2Zr3(MoO4)9:Eu3+ (or Tb3+), La3TaO4Cl6:Eu3+ (or Tb3+), La3TaO4Cl6:Eu3+ (or Tb3+), La3WO6Cl3:Eu3+ (or Tb3+), La3WO6Cl3:Eu3+ (or Tb3+), LaAlO3:Eu3+ (or Tb3+), LaAlO3:Eu3+ (or Tb3+), LaB3O6:Eu3+ (or Tb3+), LaBO3:Eu3+ (or Tb3+), LaF3:Eu3+ (or Tb3+), LaF3:Eu3+ (or Tb3+), LaGaO3:Eu3+ (or Tb3+), LaMgB5O10:Eu3+ (or Tb3+), LaOBr:Eu3+ (or Tb3+), LaOCl:Eu3+ (or Tb3+), LaOF:Eu3+ (or Tb3+), LaOI:Eu3+ (or Tb3+), LaP3O9:Eu3+ (or Tb3+), LaPO4:Eu3+ (or Tb3+), LaYO3:Eu3+ (or Tb3+), Li2Lu5O4(BO3)3:Eu3+ (or Tb3+), Li3Ba2La3(MoO4)8:Eu3+ (or Tb3+), Li3La2(BO3)3:Eu3+ (or Tb3+), Li6Gd(BO3)3:Eu3+ (or Tb3+), Li6Y(BO3)3:Eu3+ (or Tb3+), LiCaAlF6:Eu3+ (or Tb3+), LiEu3+ (or Tb3+)Mo2O8:Eu3+ (or Tb3+), LiGd6O5(BO3)3:Eu3+ (or Tb3+), LiGdF4:Eu3+ (or Tb3+), LiGdGeO4:Eu3+ (or Tb3+), LiGdO2:Eu3+ (or Tb3+), LiGdSiO4:Eu3+ (or Tb3+), LiLa2O2BO3:Eu3+ (or Tb3+), LiLaGeO4:Eu3+ (or Tb3+), LiLaO2:Eu3+ (or Tb3+), LiLaP4O12:Eu3+ (or Tb3+), LiLaSiO4:Eu3+ (or Tb3+), LiLuGeO4:Eu3+ (or Tb3+), LiLuO2:Eu3+ (or Tb3+), LiLuSiO4:Eu3+ (or Tb3+), LiScO2:Eu3+ (or Tb3+), LiSr2YO4:Eu3+ (or Tb3+), LiSrAlF6:Eu3+ (or Tb3+), LiSrAlF6:Eu3+ (or Tb3+), LiY6O5(BO3)3:Eu3+ (or Tb3+), LiYF4:Eu3+ (or Tb3+), LiYGeO4:Eu3+ (or Tb3+), LiYO2:Eu3+ (or Tb3+), LiYSiO4:Eu3+ (or Tb3+), Lu2O2(SO4):Eu3+ (or Tb3+), Lu2Si2O7:Eu3+ (or Tb3+)3+ (or Tb3+), Lu3Al5O12:Eu3+ (or Tb3+), Lu3Al5O12:Yb:Eu3+ (or Tb3+), LuBO3:Eu3+ (or Tb3+), LuBO3 (calcite):Eu3+ (or Tb3+), LuOCl:Eu3+ (or Tb3+), LuPO4:Eu3+ (or Tb3+), Mg2Gd8(SiO4)6O2:Eu3+ (or Tb3+), Mg2La8(SiO4)6O2:Eu3+ (or Tb3+), MgO:Eu3+ (or Tb3+), MgSiO3:Eu3+ (or Tb3+), Na3YSi3O9:Eu3+ (or Tb3+), Na6Gd(BO3)3:Eu3+ (or Tb3+), NaGdGeO4:Eu3+ (or Tb3+), NaGdO2:Eu3+ (or Tb3+), NaGdSiO4:Eu3+ (or Tb3+), NaGdSiO4:Eu3+ (or Tb3+), NaLaGeO4:Eu3+ (or Tb3+), NaLaO2:Eu3+ (or Tb3+), NaLaSiO4:Eu3+ (or Tb3+), NaLuGeO4:Eu3+ (or Tb3+), NaLuSiO4:Eu3+ (or Tb3+), NaScO2:Eu3+ (or Tb3+), NaSrLa(VO4)2:Eu3+ (or Tb3+), NaYGeO4:Eu3+ (or Tb3+), NaYSiO4:Eu3+ (or Tb3+), ScBO3:Eu3+ (or Tb3+), ScOCl:Eu3+ (or Tb3+), ScPO4:Eu3+ (or Tb3+), Sr2B2O5:Eu3+ (or Tb3+), Sr2Gd8(SiO4)6O2:Eu3+ (or Tb3+), Sr2La2Zn2O7:Eu3+ (or Tb3+), Sr2La2Zn2O7:Eu3+ (or Tb3+), Sr2LaAlO5:Eu3+ (or Tb3+), Sr3(BO3)2:Eu3+ (or Tb3+), Sr3(PO4)2:Eu3+ (or Tb3+), Sr3(PO4)2:Sm:Eu3+ (or Tb3+), Sr3Gd2(BO3)4:Eu3+ (or Tb3+), Sr3La2(BO3)4:Eu3+ (or Tb3+), Sr3La6(SiO4)6:Eu3+ (or Tb3+), Sr3Y2(BO3)4:Eu3+ (or Tb3+), Sr5(PO4)3F:Eu3+ (or Tb3+), Sr9Ln(VO4)7:Eu3+ (or Tb3+), SrA12 B2O7:Eu3+ (or Tb3+), SrB4O7:Eu3+ (or Tb3+), SrB6O10:Eu3+ (or Tb3+), SrCO3:Eu3+ (or Tb3+), SrGdAlO4:Eu3+ (or Tb3+), SrHfO3:Tm:Eu3+ (or Tb3+), SrLa2BeO5:(4c):Eu3+ (or Tb3+), SrLa2BeO5:(8d):Eu3+ (or Tb3+), SrLaAlO4:Eu3+ (or Tb3+), SrLaGa3O7:Eu3+ (or Tb3+), SrLaO(BO3):Eu3+ (or Tb3+), SrO:Eu3+ (or Tb3+), SrY2O4:(Sr-site):Eu3+ (or Tb3+), SrY2O4:(Y-site1):Eu3+ (or Tb3+), SrY2O4:(Y-site2):Eu3+ (or Tb3+), Tb2Mo3O12:Eu3+ (or Tb3+), Tb2W3O12:Eu3+ (or Tb3+), TbBO3:Eu3+ (or Tb3+), ThO2:Eu3+ (or Tb3+), X1-Gd2SiO5:Eu3+ (or Tb3+), X1-Y2SiO5:Eu3+ (or Tb3+), X2-Y2SiO5:Eu3+ (or Tb3+), Y17.33(BO3)4(B2O5)2O16:Eu3+ (or Tb3+), Y2Ge2O7:Eu3+ (or Tb3+), Y2GeO5:Eu3+ (or Tb3+), Y2O2(SO4):Eu3+ (or Tb3+), Y2O2S:Eu3+ (or Tb3+), Y2O2S:Eu3+ (or Tb3+), Y2O3:Eu3+ (or Tb3+), Y2P4O13:Eu3+ (or Tb3+), Y2Si2O7:Eu3+ (or Tb3+), Y2SiO5:Eu3+ (or Tb3+), Y3Al5O12:Eu3+ (or Tb3+), Y3Ga5O12:Eu3+ (or Tb3+), Y3O4Br:Eu3+ (or Tb3+), Y3O4Cl:Eu3+ (or Tb3+), Y3PO7:Eu3+ (or Tb3+), Y4GeO8:Eu3+ (or Tb3+), Y8P2O17:Eu3+ (or Tb3+), YAl3(BO3)4:Eu3+ (or Tb3+), YAlO3:Eu3+ (or Tb3+), YAlO3:Eu3+ (or Tb3+), YBO3:Eu3+ (or Tb3+), YbOBr:Yb:Eu3+ (or Tb3+), YF3:Eu3+ (or Tb3+), YOBr:Eu3+ (or Tb3+), YOCl:Eu3+ (or Tb3+), YOCl:Eu3+ (or Tb3+), YOF:Eu3+ (or Tb3+), YOF:Eu3+ (or Tb3+), YP3O9:Eu3+ (or Tb3+), YPO4:Eu3+ (or Tb3+), YPO4:Eu3+ (or Tb3+), YTaO4:Eu3+ (or Tb3+), YVO4:Eu3+ (or Tb3+), ZrP2O7:Eu3+ (or Tb3+), or mixtures thereof.

The skilled person will understand that the notation Eu3+ (or Tb3+) indicates that the host lattice is doped with Eu3+ or with Tb3+.

In an exemplary embodiment, the second luminescent material is selected from the group consisting of (Srₙ,Ca₁₋ₙ)₁₀(PO₄)₆*B₂O₃:Eu²⁺ (wherein 0≦n≦1), (Ba,Sr,Ca)₅(PO₄)₃(Cl,F,Br,OH):Eu²⁺,Mn²⁺, (Ba,Sr,Ca)BPO₅:Eu²⁺,Mn²⁺,Sr₂Si₃O₈*2SrCl₂:Eu²⁺, (Ca,Sr,Ba)₃MgSi₂O₈:Eu²⁺,Mn²⁺,BaAl₈O₁₃:Eu²⁺, 2SrO*0.84P₂O₅*0.16B₂O₃:Eu²⁺, (Ba,Sr,Ca)MgAl₁₀O₁₇:Eu²⁺,Mn²⁺,K₂SiF₆:Mn⁴⁺,(Ba,Sr,Ca)Al₂O₄:Eu²⁺, (Y,Gd,Lu,Sc,La)BO₃:Ce³⁺,Tb³⁺,(Ba,Sr,Ca)₂(Mg,Zn)Si₂O₇:Eu²⁺, (Mg,Ca,Sr,Ba,Zn)₂Si₁₋ₓO₄₋₂ₓ:Eu²⁺ (wherein 0≦x≦0.2), (Sr,Ca,Ba)(Al,Ga)₂S₄:Eu²⁺, (Ca,Sr)₈(Mg,Zn)(SiO₄)₄Cl₂:Eu²⁺,Mn²⁺,Na₂Gd₂B₂O₇:Ce³⁺,Tb³⁺, (Sr,Ca,Ba,Mg,Zn)₂P₂O₇:Eu²⁺,Mn²⁺, (Ca,Sr)S:Eu²⁺,Ce³⁺, (Y,Gd,Tb,La,Sm,Pr,Lu)₃(Sc,Al,Ga)₅₋ₙO_{12-3/2n}:Ce³⁺ (wherein 0≦n≦0.5), ZnS:Cu+, Cl-, (Y,Lu,Th)₃Al₅O₁₂:Ce³⁺, ZnS:Cu+,Al3+, ZnS:Ag+,Al3+, ZnS:Ag+,Cl-, (Ca, Sr) Ga₂S₄:Eu²⁺, SrY₂S₄:Eu²⁺, CaLa₂S₄:Ce³⁺, (Ba,Sr,Ca)MgP₂O₇:Eu²⁺,Mn²⁺, CaWO₄, (Ba,Sr,Ca)ₙSiₙNₙ:Eu²⁺ (where 2n+4=3n), Ca₃(SiO₄)Cl₂:Eu²⁺, (Y,Lu,Gd)₂₋ₙCaₙSi₄N₆₊ₙC₁₋ₙ:Ce³⁺, (wherein 0≦n≦0.5), (Lu,Ca,Li,Mg,Y) alpha-SiAlON doped with Eu²⁺ and/or Ce³⁺, (Ca,Sr,Ba)SiO₂N₂:Eu²⁺,Ce³⁺, (Sr,Ca)AlSiN₃:Eu²⁺, CaAlSi(ON)₃:Eu²⁺, Sr₁₀(PO₄)₆Cl₂:Eu²⁺, (BaSi)O₁₂N₂:Eu²⁺, SrSi₂(O,Cl)₂N₂:Eu²⁺, (Ba,Sr)Si₂(O,Cl)₂N₂:Eu²⁺ or mixtures thereof.

Preferably, the second luminescent material is excitable in the wavelength range between 380 to 580 nm. The second luminescent material may for instance be excitable in the UV-A (315 to 400 nm), violet (400 to 440 nm), blue (440 to 480 nm) or green (510 to 560 nm) wavelength range, preferably in the blue (440 to 480 nm) wavelength range. Preferably, the second luminescent material is doped with one or more ions selected from of the group consisting of Eu²⁺, Pb²⁺, Bi³⁺ and Ce³⁺, more preferably Ce³⁺ and Eu²⁺.

In a preferred embodiment, the second luminescent material is a Ce³⁺-doped garnet, such as Y₃Al₅O₁₂:Ce³⁺ ("YAG:Ce") or Lu₃Al₅O₁₂:Ce³⁺ ("LuAG:Ce") or a combination thereof.

Preferably, in the case of Ce³⁺ doping, the second luminescent material has a host lattice doped at a level of 0.05-5%, more preferably 0.1-4.

The mixture may comprise further luminescent materials. For instance, the mixture may comprise at least two emitting materials and/or at least two sensitizer materials. In a preferred embodiment, the mixture comprises first emitting material having a host lattice doped with Eu³⁺ ions; and a second emitting material having a host lattice doped with Tb³⁺ ions. The mixture may comprise a first sensitizer material and a second sensitizer material. The first sensitizer material and second sensitizer material may be so arranged to each other to allow energy transfer from the first sensitizer material to the first emitting material and/or from the second sensitizer material to the second emitting material.

It is possible to bring the first luminescent material (light emitting material) proximal to a large (e.g., several 10s, 100s, or 1000s nm) second luminescent material (sensitizer material). In this case, it may be beneficial to dope the donor sufficiently so that efficient non-radiative energy migration occurs between ions excited deep within the donor particle and those near the surface and which are thus likely to participate in FRET and give their energy to the neighboring first luminescent material. In the cases where high dopant concentrations lead to reduced quantum yields, for instance due to large size differences between the dopant atom in comparison to the target lattice site, co-doping with a second active ion can be used to enhance energy migration. It is important that FRET can occur between the first and second active ion within the same host lattice in order to have effective migration of the energy. In a preferred embodiment YAG:Ce³⁺, LuAG:Ce³⁺ or a combination of these two materials are doped with <5% Ce³⁺ and co-doped with up to several 10's of percent Tb³⁺. Energy migration might be beneficial for smaller particles as well, as well as helpful for the emitter particles.

### Luminescent material, light-emitting device and lighting system

The invention further relates to a luminescent material obtainable by the method according to the invention.

In a preferred embodiment wherein the first luminescent material and the second luminescent material are selected such that the second luminescent material has an emission spectrum which overlaps at least partly with one or more of excitation bands of the first luminescent material, a luminescent material obtainable by the invention allows detectable energy transfer (FRET) from the second luminescent material (or sensitizer material) to the first luminescent material (light emitting material).

The skilled person will understand that non-radiative energy transfer (sometimes also referred to as Fluorescent Resonance Energy Tranfer, FRET) from the second luminescent material (or sensitizer material) to the first luminescent material (or light emitting material) involves the non-radiative energy transfer of energy from an excited sensitizer ion in the second luminescent material to an acceptor (or emitter) ion in the first luminescent material. It is evidenced and detectable by increased selective excitation of the sensitizer ion in the second luminescent material, resulting in increased emission from an emitter ion in the first luminescent material.

The invention further relates to a light-emitting device comprising the luminescent material obtainable by the method according to the invention. Preferably the light-emitting device further comprises an excitation source for the luminescent material, such as for the second luminescent material. Preferably the excitation sources is a UV-A, violet or blue light emitting material which emits light towards the luminescent material with a wavelength of 315-400 nm (UV-A), 400-440 nm (violet) or 440-480 nm (blue), more preferably between 430-465 nm.

The invention further relates to a lighting system comprising a light emitting device according to the invention. Preferably, the lighting system is selected from the group consisting of a lamp or luminaire, office lighting systems, household application systems shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, and decorative lighting systems, portable systems, automotive applications and green house lighting systems.

The invention will now further be illustrated using the following examples, without however being limited thereto.

### EXAMPLES

### Example 1: Exemplary Procedure

The following exemplary procedure is provided:
- Nanomaterials are mixed together in the desired weight ratios. This could be either in dried (powder) form, or dispersed in a liquid.
- A solvent is added; typically 5-20 mL of either water, methanol or ethanol is added to 100-200 mg of nanomaterials.
- Mixture is shaken and stirred for a few minutes
- Mixture is sonicated for 1.5 hrs
- Base piranha solution is prepared in the meantime: concentrated NH4OH solution (30% in water) is heated to 60C, the H2O2 (30% in water) is added in a ∼3:1 ratio and reheated to 60C.
- About 15mL of the base piranha solution is added to the nanopowder dispersion/solution and heated to 60-80C and stirred for 90 min.
- After 30 min. solution/dispersion was cooled to room temperature and centrifuged at 3000 rpm for 10 min
- Piranha solution was removed after centrifuging, and 5 mL of acidic ethanol was added to wash (pH 4, prepared by adding 0.1M HCl to ethanol). Mixture was shaken and sonicated for a few minutes to disperse the materials again.
- Centrifuged again (3000 rpm, 10 min), removed supernatant and re-mixed in acidic ethanol.
- In total particles were washed 5 times with acidic ethanol before adding few mL water
- Particles were dried in the oven at 120-180 C.
- Sample was grinded into a powder

### Example 2: Ligand removal from LaPO4:Eu³⁺ (10%) + LaPO4:Tb³⁺ (40%) nanoparticles

LaPO₄:Eu³⁺ (5%) + LaPO₄:Tb³⁺ (40%) nanoparticles with tributylamine ligands were synthesized using the following (known in literature) procedure:
A typical recipe for the preparation of La₁₋ₓLnₓPO₄ nanoparticles in a high boiling coordinating solvent is as follows:
- Dissolve a total of 10 mmol LaCl₃.6H₂O and EuCl₃.6H₂O or TbCl₃.6H₂O, with a ratio depending on the desired doping level, in approximately 10 mL of methanol p.a. in a 100 mL 3-neck round-bottomed flask and acquire a clear solution
- Add 10.9 mL, 10.650 g (40 mmol) tributyl phosphate
- Remove methanol from solution under vacuum (Schlenk-line), careful with vacuum
- Add 30 mL (32 g) diphenyl ether
- Open system, flush afterwards
- Remove the water released by the hydrated metal chlorides under vacuum at 105°C (Schlenk line) - water should evaporate around 80-85°C
- Cool down reaction mixture to below 50°C and add 9.5 mL, 7.41 g (40 mmol) tributylamine to the clear solution (under nitrogen)
- Add 7.0 mL of a 2 M solution phosphoric acid in dihexyl ether (dissolve 1.96 g H₃PO₄ in 10 mL dihexyl ether under ultrasonification), large vial
- Heat the mixture to 200°C for 16 hours and cool reaction mixture to room temperature
- Separate nanocrystals by centrifuging at 2000 rpm for 5 minutes
- Wash nanocrystals several times with toluene, careful with adding methanol
- Dry powder under vacuum
- The powder should be redispersible in methanol
- Perform S-ray Diffraction (XRD) measurements to determine whether the La₁₋ₓPO4:Lnₓ is obtained

The procedure described in example 1 was followed. The nanoparticles were mixed in a 1:1 weight ratio.

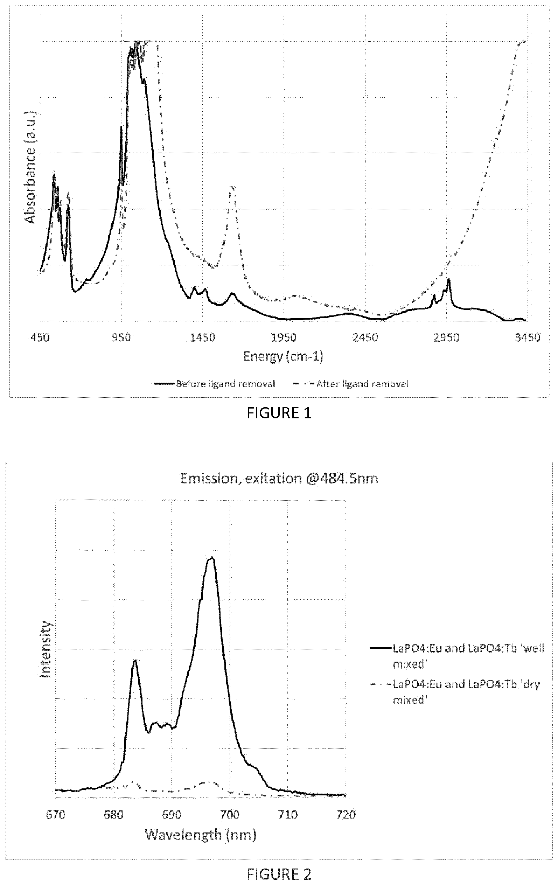

FTIR spectra of the LaPO₄ particles before and after ligand removal were measured. The results have been indicated in Figure 1. In this figure peaks around 1450 and 2950 cm⁻¹ indicate C-H bending and stretching from the ligands respectively, which are clearly present in the case of the sample measured before ligand removal. After the ligand removal treatment these peaks are no longer present, indicating that ligands have been successfully removed.

### Example 3: Evidence for energy transfer

In this example the following experiments are performed to show the occurrence of energy transfer in the LaPO₄ particles obtained in example 2.

To this end the behavior of the LaPO₄ particles obtained in example 2 is compared to that of LaPO₄:Eu (10%) + LaPO₄:Tb (40%) nanoparticles (also in a 1:1 weight ratio) which do not exhibit energy transfer, as the LaPO₄:Eu (10%) nanoparticles and LaPO₄:Tb (40%) nanoparticles are processed separately by the following "dry mixing" process
- Nanomaterials of interest are weighted in the desired weight ratios, but both put into a different vial (not mixed together). This could be either in dried (powder) form, or dissolved/dispersed in a liquid.
- A solvent is added in both vials; typically 5-20 mL of either water, methanol or ethanol is added to 100-200 mg of nanomaterials.
- Dispersions are shaken and stirred for a few minutes
- Dispersions are sonicated for 1.5 hrs
- Base piranha solution is prepared in the meantime: concentrated NH4OH solution (30% in water) is heated to 60C, the H2O2 (30% in water) is added in a ∼3:1 ratio and reheated to 60C.
- About 15mL of the base piranha solution is added to the nanopowder dispersions/solutions and heated to 60-80C and stirred for 90 min.
- After 30 min. solutions/dispersions were cooled to room temperature and centrifuged at 3000 rpm for 10 min
- Piranha solution was removed after centrifuging, and 5 mL of acidic ethanol was added to wash (pH 4, prepared by adding 0.1M HCl to ethanol). Samples were shaken and sonicated for a few minutes to disperse the materials again.
- Centrifuged again (3000 rpm, 10 min), removed supernatant and re-mixed in acidic ethanol.
- In total particles were washed 5 times with acidic ethanol before adding few mL water
- Particles were dried in the oven at 120-180C.
- Materials were grinded into a powder.
- Materials were put together and mixed by shaking the bottle

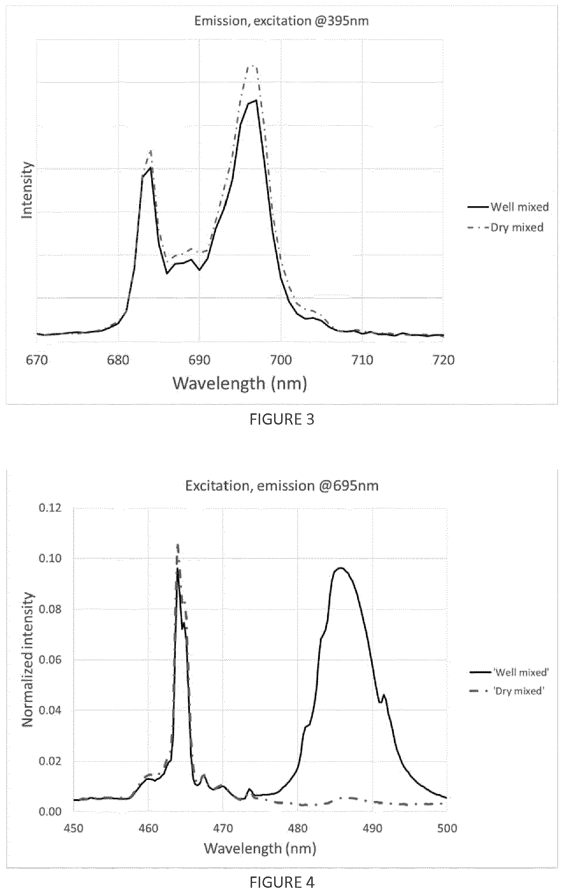

Then, the following measurements were performed on both samples (i.e. the sample obtained in example 2 and the sample obtained by the dry mixing)
- Samples were excited at 484.5 nm, were only Tb is excitable. Figure 2 shows the emission intensity from 670-720 nm, were only Eu3+ emits light. Clearly, the sample obtained in example 2 shows much more emission in this region, indicating energy transfer from Tb → Eu.
- Samples were excited at 395 nm, were only Eu3+ is excitable and no IFRET processes can take place. Figure 3 shows that both the sample according to example 2 and 'dry mixed' samples show very similar (Eu3+) emission intensities, indicating that in both mixtures the Eu3+ has very similar activity.
- Excitation spectrum was recorded of the Eu3+ emission at 695 nm, shown in Fig. 4. Only for the sample obtained in example 2 the Tb excitation lines are clearly visible, indicating IFRET mechanisms.

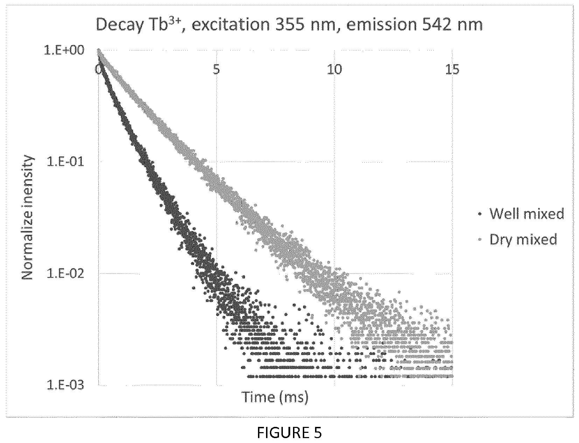

- Figure 5 shows the decay of both samples, which is clearly accelerated in case of the sample obtained in example 2, which is a typical signature of non-radiative energy transfer processes.

### Example 4

Four different methods were used to treat the nanoparticles:
1. HCl treatment (as in Wang et al, Tuning upconversion through Energy Migration in Core-Shell Nanoparticles, Supplementary Information, Nature Materials (2011) 1-35). This method did not work in our case (see Table 1), and strong acids can damage or even dissolve the nanoparticles.
2. (NH4)2S treatment, which is an example of a more selective method: This procedure is based on Nano Lett., 2011, 11 (12), pp 5356-5361, where they show ligand removal of InP and CdSe quantum dots, while maintaining quantum confinement. They also show that the particles touch after ligand removal and do not touch before ligand removal. The principle is that S binds to the metal of the nanoparticle host lattice, while (NH4) binds to the oleic acid ligand, thereby decoupling the nanoparticles from the ligands. This method works for some nanoparticle-ligand couples, but is much more selective than treatment by an oxidizing agent (see Table 1)
   - 0.004 M (NH4)2S solution was prepared by adding 0.03 mL 50 w% (NH4)2S solution in water to 50 mL methanol.
   - 10 mL of this solution was added to ∼200g nanoparticles, and stirred for 15 minutes
   - Acetone was added to sediment the particles, and the mixture was centrifuged (10 min. @3000 rpm)
   - Supernatant was removed, and acidic ethanol was added (pH 4, prepared by adding 0.1M HCl to ethanol). Mixture was shaked and sonicated for 40 min.
   - Particles were washed 4 times with acidic ethanol before adding few mL water.
   - The LaPO4:Ce particles were washed again 4 times with water. The YVPO4:Eu didn't come out of solution after adding water, so no further washing was done.
   - Particles were dried in the oven at 180-200C.
   In our case we found successful ligand removal in some, but not all cases for this method.
3. Thermal treatment: a few hours at 1100C in air
4. Base piranha treatment as described above.

After treatment the samples were measured using FTIR, or put in the oven at 300C (in air) for 2 hours. In case organic ligands are present, they will turn black which is clearly visible by eye. If organic ligands have successfully been removed, the material will not change color or become a lighter color.

**Table 1**

| **Material** | **Ligand** | **Method** | **Ligands removed?** |
|---|---|---|---|
| LaPO4:Ce (∼4 nm diameter) | tributylamine | (NH4)2S treatment (literature) | Yes |
| LaPO4:Ce (∼4 nm diameter) | tributylamine | Base piranha treatment | Yes |
| LaPO4:Ce (∼4 nm diameter) | Tributylamine | Thermal treatment (1100C) | Yes, but Ce⁴⁺ formation |
| YVPO4:Eu (∼7 nm diameter) | Ethylene glycol | (NH4)2S treatment (literature) | No |
| YVPO4:Eu (∼7 nm diameter) | Ethylene glycol | Base piranha treatment | Yes |
| YVPO4:Eu (∼7 nm diameter) | Ethylene glycol | Thermal treatment (1100C) | Yes |
| Y3Al5O12:Ce (∼7 nm diameter) | Ethylene glycol | Base piranha | Yes |
| NaYF4:Eu (∼20 nm diameter) | Oleate | HCl treatment | No |
| NaYF4:Eu (∼20 nm diameter) | Oleate | (NH4)2S treatment (literature) | Yes |
| NaYF4:Eu (∼20 nm diameter) | Oleate | Base piranha treatment | Yes |

## Claims

1. Method for treating a luminescent material comprising organic ligands, said method comprising
contacting said luminescent material comprising organic ligands with an oxidizing agent.

2. Method according to claim 1, wherein said luminescent material is in the form of nanoparticles, preferably wherein the D₅₀ value of the nanoparticles is ≥ 1nm and ≤ 100 nm.

3. Method according to any preceding claim, wherein said oxidizing agent comprises H₂O₂.

4. Method according to any preceding claim, further comprising separating said luminescent material from the oxidizing agent.

5. Method according to any preceding claim, wherein said contacting is carried out in the presence of a solution comprising the oxidizing agent, preferably wherein said solution comprises water or an alcohol (e.g. methanol or ethanol) or a mixture thereof.

6. Method according to claim 5, wherein said solution comprises NH₄OH.

7. Method according to claim 5 or 6, further comprising recovering said luminescent material from said solution.

8. Method according to claim 7, wherein said recovering said luminescent material from the solution comprises gravity separation (preferably centrifugation) and/or drying by evaporation.

9. Method according to claim 8 or 9, wherein said recovering said luminescent material from the solution comprises washing said luminescent material using a washing liquid and recovering said luminescent material from said washing liquid, preferably wherein said recovering said luminescent material from said washing liquid comprises gravity separation (preferably by centrifugation) and/or drying by evaporation.

10. Method according to any preceding claim, wherein said luminescent material comprising organic ligands is a mixture comprising at least a first luminescent material and a second luminescent material, and wherein the first luminescent material and/or second luminescent material comprise organic ligands, preferably wherein the first luminescent material and the second luminescent material comprise organic ligands.

11. Method according to claim 10, wherein the first luminescent material and/or second luminescent material are in the form of nanoparticles, preferably wherein the first luminescent material and the second luminescent material are in the form of nanoparticles.

12. Luminescent material according to any one of claims 10 or 11, wherein the first luminescent material and the second luminescent material are selected such that the second luminescent material has an emission spectrum which overlaps at least partly with one or more of excitation bands of the first luminescent material.

13. Luminescent material obtainable by the method according to any one preceding claim.

14. Luminescent material obtainable by the method according to claim 13, wherein said luminescent material allows non-radiative energy transfer from said second luminescent material to said first luminescent material.

15. Light-emitting device, said light emitting device comprising the luminescent material according to claim 13 or 14, preferably wherein light-emitting device further comprises an excitation source for the luminescent material, such as for the second luminescent material.

16. A lighting system comprising a light emitting device according to claim 15, preferably, wherein the lighting system is selected from the group consisting of a lamp or luminaire, office lighting systems, household application systems shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, and decorative lighting systems, portable systems, automotive applications and green house lighting systems.
